# FASCICULE DE BREVET EUROPEEN

(11) **EP 1 285 846 B1**
(45) Date de publication et mention de la délivrance du brevet: **03.11.2004**
(21) Numéro de dépôt: 02366006.1
(22) Date de dépôt: 22.08.2002
(51) Int. Cl.: B62D 53/06

(54) **Remorque à plateau abaissable destinée notamment au transport de matériel agricole**
Anhänger mit absenkbarer Ladefläche, insbesondere für den Transport von landwirtschaftlichen Maschinen
Trailer with lowerable platform , especially for agricultural machines

(30) Priorité: 23.08.2001 FR 0111075; 09.01.2002 FR 0200180
(43) Date de publication de la demande: 26.02.2003
(73) Titulaire: Perard SARL, 55120 Lavoye (FR)
(72) Inventeur: Perard, Patrick, 57070 Metz (FR)
(74) Mandataire: Bentz, Jean-Paul

(56) Documents cités:
- DE-A- 2 719 072
- DE-B- 1 012 833
- FR-A- 2 654 405
- GB-A- 1 486 894
- US-A- 3 497 232

## Description

La présente invention concerne une remorque destinée au transport de matériel agricole ou autre, trop encombrant pour évoluer sur les routes dans le sens de la largeur. Cette remorque est destinée à être attelée à un tracteur agricole ou toute autre machine susceptible de tracter une remorque. La remorque concernée peut aussi être utilisée pour tout autre transport de marchandises diverses, en offrant un avantage particulier de facilité de chargement et de déchargement.

En ce qui concerne le transport de matériel encombrant, la réglementation française du code de la route autorise le transport de matériels sur route jusqu'à une largeur de 3 mètres. Pour transporter des machines agricoles équipées d'outils dont la largeur peut nettement dépasser cette limite, il convient d'utiliser des outils repliables ou de transporter ces outils dans le sens de la longueur, après les avoirs démontés de la machine.

Pour ce faire, il existe sur le marché plusieurs sortes de remorques ou plateaux de transport équipés de systèmes d'abaissement au sol, permettant d'y déposer de tels outils par le côté, directement à partir d'un tracteur ou autre machine similaire.

L'utilisation de remorques à plateaux abaissables présente aussi d'autres avantages par exemple pour y charger divers produits, quel que soit leur conditionnement, en abaissant le niveau de chargement pour en rendre l'accès plus aisé aux personnels ou machines de manutention.

L'invention concerne plus particulièrement le système d'abaissement au sol et de relevage du plateau. Aujourd'hui deux principes de fonctionnement existent sur le marché :

Dans le premier, il s'agit d'un plateau où l'essieu, ou les essieux, et les roues sont situés à l'arrière, dans le sens normal de circulation de la remorque, de la surface de chargement. Le ou les essieux sont montés articulés par rapport au plateau et commandés par un vérin hydraulique ; les roues reposant sur le sol, le plateau peut alors descendre ou remonter par l'action de ces vérins. Ce système simple et efficace présente néanmoins des inconvénients : pour des remorques de grande longueur, par exemple supérieure à 6 mètres, les roues se trouvent fortement éloignées de l'attelage du tracteur et la remorque nécessite beaucoup d'espace pour manoeuvrer. De plus, le ou les essieux ne sont pas sous la charge pendant le transport et les plateaux subissent de ce fait des flexions importantes quand ils sont fortement chargés.

Dans le deuxième système, un train d'un ou deux essieux est positionné sous la remorque pendant le transport, à environ 2/3 - 1/3 de sa longueur, et se déplace vers l'avant ou vers l'arrière par l'intermédiaire de galets coulissant dans des rails. A une extrémité, ces rails se prolongent au-delà du plateau, et peuvent pivoter autour d'un axe transversal, de manière que l'essieu amené sur cette partie de rails soit dégagé du plateau et que ce dernier puisse être abaissé et déposé au sol par un pivotement relatif de la partie de rail en prolongement par rapport au plateau. Ce système est beaucoup plus efficace et beaucoup plus stable que le premier, mais il est assez complexe à utiliser et reste relativement coûteux à fabriquer.

La présente invention a pour but de résoudre ces problèmes.

Avec ces objectifs en vue, l'invention a pour objet une remorque à plateau abaissable comportant un châssis et un train d'essieu porté par un chariot coulissant longitudinalement par rapport au châssis en étant guidé par des rails solidaires du châssis, le chariot comportant des moyens de guidage avant, pivotant par rapport au chariot selon un axe de pivot transversal, et des moyens de guidage arrière, les dits moyens de guidage avant et arrière coulissant dans les rails pour assurer une translation rectiligne du chariot, le train d'essieu étant décalé longitudinalement par rapport au dit axe de pivot vers les moyens de guidage arrière, les rails débouchant librement à l'extrémité de la remorque, et l'extrémité de la remorque comportant en position fixe des moyens de guidage complémentaire aptes à coopérer avec une surface de guidage supérieure du chariot, de manière que lorsque les moyens de guidage arrière sont sortis des rails, l'extrémité du châssis repose sur la dite surface supérieure de guidage par l'intermédiaire des moyens de guidage complémentaires, de sorte que, quand le chariot est déplacé par rapport au châssis avec les moyens de guidage avant dans les rails et les moyens de guidage complémentaires en appui sur la surface supérieure de guidage, le chariot pivote autour de l'axe de pivot transversal et autorise ainsi l'abaissement du châssis par rapport au train d'essieu. Cettes caractéristiques du préambule de la revendication 1 sont connues du GB-A-1 486 894. Selon l'invention la forme de la dite surface supérieure de guidage est concave.

Ainsi, comme on le comprendra mieux par la suite, le système selon l'invention permet de s'affranchir de tout prolongement de rails au-delà de l'extrémité du plateau et des mécanismes nécessaires à l'articulation de ces prolongements de rails et à la commande de leur pivotement. En effet, les rails du châssis assurent, de manière équivalente aux remorques selon l'art antérieur, le coulissement longitudinal du ou des essieux par rapport au plateau; mais en fin de course, ce sont les moyens de guidage complémentaires du châssis et la forme particulière de la surface de guidage du chariot qui assurent le pivotement du dit chariot par rapport au plateau, permettant l'abaissement de ce dernier. On évite ainsi les complications générées par l'utilisation de portions de rails pivotantes de l'art antérieur, et on assure aussi sans difficultés le coulissement et le pivotement du chariot par un seul vérin de commande.

Selon des dispositions préférentielles :
- les rails sont des profilés de section en forme de U, et les moyens de guidage avant et arrière du chariot sont des galets qui se déplacent dans les dits U.
- l'axe de pivot transversal est l'axe de rotation des galets constituant les moyens de guidage avant. Cette disposition, cependant non indispensable, facilite la réalisation puisqu'on utilise alors un même axe comme axe de rotation des galets et comme axe de pivotement du chariot.
- les moyens de guidage complémentaire sont aussi des galets montés en position fixe sur le châssis.
- les galets de guidage complémentaires comportent une rainure circonférentielle, apte à coopérer avec une nervure de profil correspondant à la dite rainure, la dite nervure étant aménagée sur la surface supérieure de guidage et s'étendant selon la direction longitudinale du châssis en suivant la forme concave de la dite surface. Cette disposition, dont la réalisation est simple, permet d'assurer un guidage efficace du chariot pendant la dernière partie de sa course après que les galets arrières soient sortis des rails et lors de son pivotement par rapport au châssis.
- le déplacement du chariot est commandé par un vérin dont la tête est articulée sur le chariot selon un axe confondu avec l'axe de pivot transversal. Cette disposition particulièrement avantageuse permet de conserver une position constante de l'axe du vérin, et donc en particulier du corps du vérin, même lors du pivotement du chariot. Le corps de vérin ne subit alors pratiquement aucun débattement tout au long de la course de sa tige, ce qui minimise l'encombrement nécessaire et permet de placer le vérin dans une poutre centrale du châssis, donc sans créer d'encombrement en plus du châssis et en assurant une très bonne protection du vérin lors du roulage de la remorque.
- la remorque comporte un verrou de sécurité comportant un crochet articulé sur le châssis et apte à s'engager automatiquement avec un moyen d'accrochage solidaire du chariot lorsque le chariot est ramené dans une position avancée de transport.
- le crochet est constitué d'une chape pivotante ayant deux ailes en forme de crochet et les moyens d'accrochage sont constitués par des tourillons de l'axe de liaison du vérin sur le chariot sur lesquels s'engage chaque crochet de la chape.

Ces dispositions complémentaires ne sont nullement limitatives de l'invention. Les moyens de guidage pourraient être d'autres organes que des galets, par exemple des patins coulissants. Les rails pourraient aussi avoir un profil différent d'un U.

La surface supérieure de guidage du chariot pourrait aussi être configurée différemment, tout comme les moyens de guidage complémentaires, dans la mesure où est respecté la forme de la dite surface, comportant nécessairement une forme en creux ou une cuvette dont le fond est situé en dessous du niveau des moyens de guidage avant et arrière, pour constituer une surface ou une rainure de guidage, solidaire du chariot, et apte à autoriser un mouvement ascendant des moyens de guidage arrière lorsque ces derniers sont dégagés des rails solidaires du châssis de la remorque.

Dans la présente invention, le principe de déplacement d'un train d'essieu utilisé par le deuxième système selon l'art antérieur, mentionné préalablement, a été conservé, mais en combinant le guidage par des galets circulant à l'intérieur de deux rails sous le plateau avec un guidage complémentaire par des galets de guidage complémentaires du train d'essieux, les dits galets complémentaires étant liés en position sur le plateau, vers l'arrière de celui-ci. Commandé par un vérin situé à l'intérieur de la poutre centrale du châssis pour éviter tout risque d'arrachement, le train d'essieu recule vers l'arrière puis pivote par rapport au plateau lorsque la tige du vérin s'allonge, et pivote dans l'autre sens, en soulevant le plateau, et revient vers l'avant lorsque la tige du vérin se rétracte.

Trois avantages importants font l'intérêt de cette invention :
Les manoeuvres de dépose au sol ou de remontée sont d'une grande simplicité. Il suffit de pousser ou tirer un levier de distributeur hydraulique en cabine pour commander le vérin et réaliser l'ensemble des manoeuvres.
L'arrière du plateau est complètement dégagé en position transport et permet ainsi un déchargement à quai avec un transpalette.
Le coût de fabrication de ce matériel est réduit d'environ 20 % par rapport à un déplacement classique du train d'essieu sur rails.

D'autres caractéristiques et avantages apparaîtront plus clairement dans la description qui va être faite d'une remorque conforme à l'invention.

On se reportera aux dessins annexés dans lesquels :

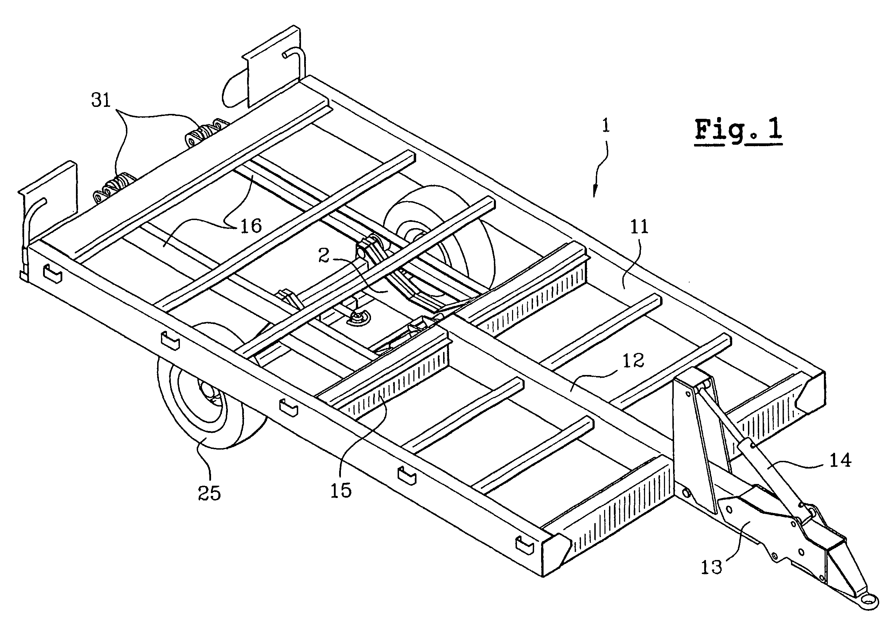

- la figure 1 est une vue d'ensemble en perspective de la remorque, en position de transport,

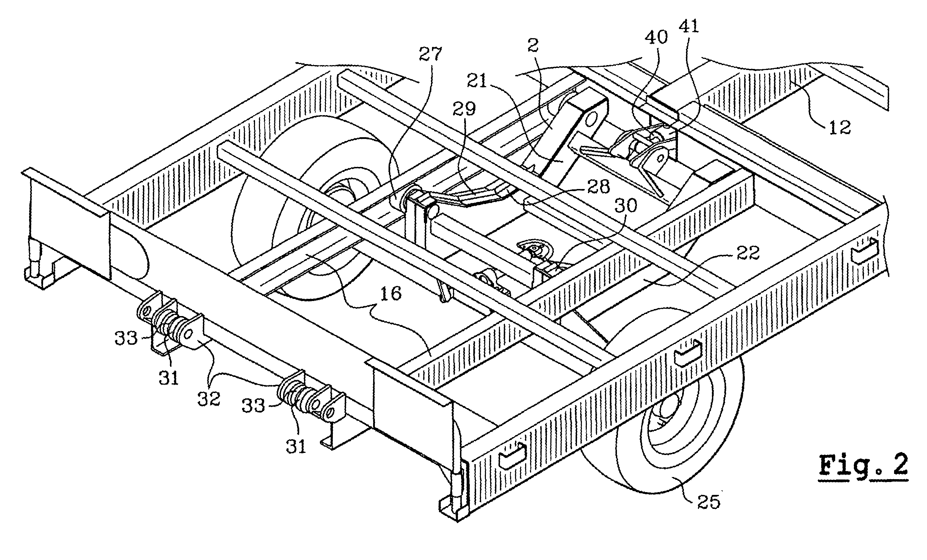

- la figure 2 est une vue partielle, de trois quarts arrière, de la remorque en position de roulage,
- la figure 3 est une vue partielle en perspective de l'arrière de la remorque, dans une position ou le chariot est déplacé vers l'arrière, les galets de guidage arrière sortis des rails et le chariot en appui sur les galets de guidage complémentaires, et le mouvement de pivotement du chariot par rapport au châssis étant commencé,

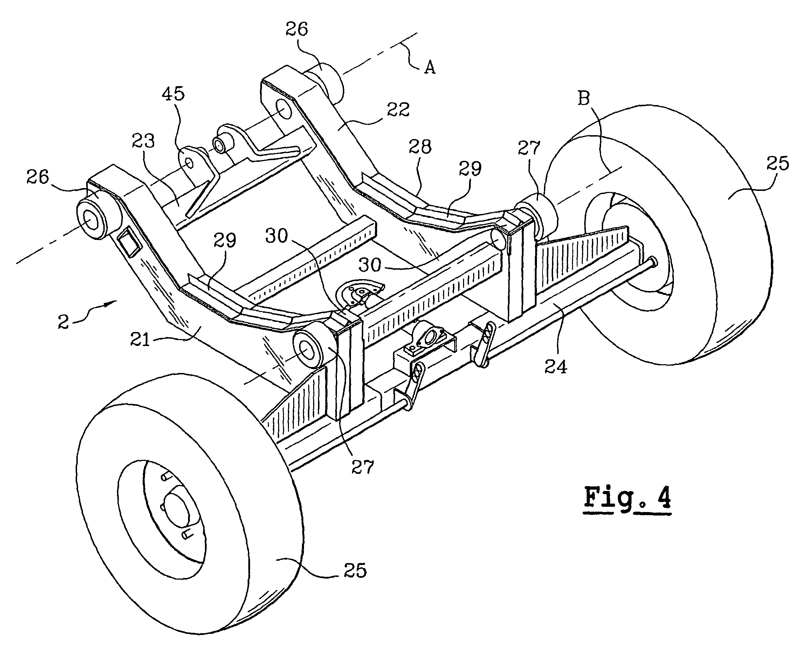

- la figure 4 est une vue en perspective du chariot seul, montrant bien la forme de la surface de guidage et d'appui des galets complémentaires,
- les figures 5 à 10 montrent, en vue de côté, la remorque dans les positions successives entre sa position de transport et sa position de chargement où le châssis repose sur le sol, les roues étant relevées à l'arrière du plateau de la remorque et ce plateau étant dans une position la plus basse possible.

La remorque comporte un plateau dont on voit sur les dessins uniquement le châssis 1, à l'exclusion du revêtement, couramment formé d'un plancher de bois par exemple.

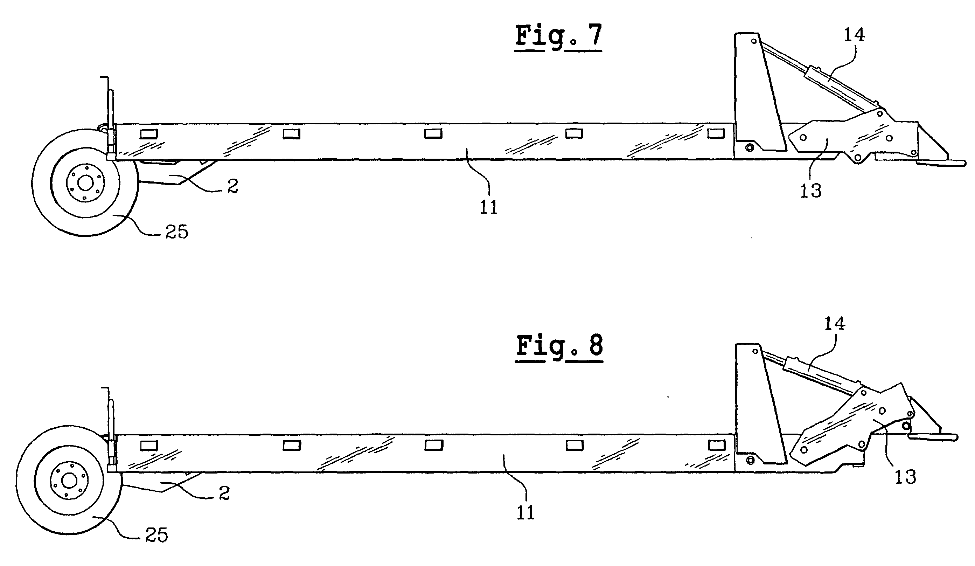

Le châssis 1 est formé d'un cadre 11, d'une poutre centrale 12 qui s'étend sur une partie seulement de la longueur du châssis et se prolonge au-delà vers l'avant par une tête d'attelage 13, articulée sur la dite poutre de manière à pouvoir être relevée par un vérin 14, comme on le voit sur les figures 8 à 10.

Vers l'arrière, à partir d'une traverse 15 située au niveau de l'extrémité arrière de la poutre centrale 12, le châssis comporte deux glissières formées par des rails 16 de profil en forme de "U" dont les ailes se font face, les rails étant disposés symétriquement par rapport à un plan médian longitudinal et se prolongeant jusqu'à l'extrémité arrière du châssis.

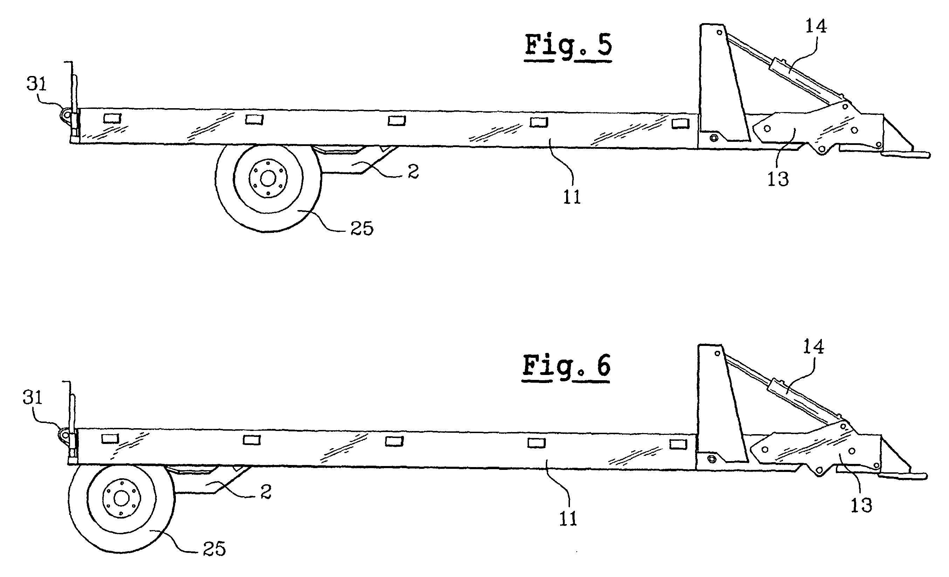

Le train d'essieu, représenté isolément figure 5, est constitué d'un chariot 2 comportant deux longerons latéraux 21, 22, une traverse avant 23 et un essieu 24 portant les roues 25. Le chariot est essentiellement réalisé en tôles formées mécano-soudées. Le chariot est muni de quatre galets, par exemple en matière en plastique, montés tourillonnant librement selon deux axes parallèles. Deux de ces galets 26 sont montés vers l'avant du chariot, vers l'extérieur des longerons, et tournant selon un même axe avant A. Les deux autres galets 27 sont montés de même vers l'arrière du chariot, tournant selon un même axe arrière B.

Les galets 26 et 27 sont respectivement insérés entre les ailes des rails 16 de manière à pouvoir y coulisser en roulant, le déplacement du chariot par rapport au châssis étant commandé par un vérin 40 dont le corps 41 est fixé sur le châssis et logé dans la poutre creuse 12. La tige 42 du vérin 40 est reliée sur la traverse avant 23 du chariot, la tête 43 du vérin étant montée sur une broche 44 fixée sur des oreilles 45 soudées sur la dite traverse 23. Le vérin 40 est un vérin double effet, d'une course de 2 ml par exemple, dépendant de la course souhaitée du chariot.

La broche 44 a préférentiellement comme axe l'axe A des galets avants, qui constitue également, comme expliqué précédemment, l'axe de pivotement du train d'essieu par rapport au châssis. Ainsi, la fixation de la tête du vérin reste toujours au même niveau quelle que soit la position de pivotement du train d'essieu, et en conséquence le corps du vérin reste immobile, sans nul besoin de pivoter tout le long de la course du chariot.

La partie supérieure de chaque longeron 21, 22 est conformée en forme de cuvette 23, et leurs faces supérieures 28 comportent chacune une nervure 29, par exemple de section triangulaire. Les nervures 29 s'étendent du fond de la cuvette 28 jusqu'au niveau des galets arrières 27, où elles sont, tout comme la surface supérieure 30 des longerons à ce niveau, sensiblement horizontales.

A l'arrière du plateau, deux galets complémentaires 31 sont montés tourillonnant sur des chapes 32 solidaires du châssis. Les galets complémentaires 31 comportent une gorge 33 de profil correspondant à la section des nervures 29 du chariot.

Les rails 16 se prolongent en fait jusqu'à l'aplomb des deux galets complémentaires 31, ou au moins de manière que, lorsque les galets arrière 27 sont sur le point de sortir des rails 16, les galets complémentaires 31 s'appuient sur les surfaces 30 à l'arrière de chaque longeron du chariot.

Ainsi, en coopérant avec la surface supérieure 28 des longerons 21, 22 et les rainures 29, les galets complémentaires 31 prennent le relais du guidage, assuré jusque là par la coopération des galets arrières 27 avec les rails 16, au moment où les galets arrière 27 sortent des rails 16, suite au coulissement provoqué du chariot vers l'arrière de la remorque.

A ce moment, les galets complémentaires 31, accompagnent le mouvement du chariot en roulant sur la partie supérieure incurvée 28 des longerons 21, 22, pendant que les deux galets avants 26 restent toujours guidés dans les rails 16, le chariot pivotant simultanément autour de l'axe A, la combinaison du mouvement de translation et du pivotement du chariot autour de l'axe des galets avant permettant le pivotement du chariot autour de l'arrière du châssis, au moment de la dépose de la remorque sur sol.

Les différentes positions du chariot sont illustrées sur les figures 5 et suivantes. La figure 5 illustre la position de roulage de la remorque, l'essieu étant situé sous le plateau, à environ 1/3 de sa longueur à partir de l'arrière. Sur la figure 6, l'essieu a été déplacé vers l'arrière par le vérin 40, les quatre galets 26 et 27 du chariot étant encore guidés dans les rails 16.

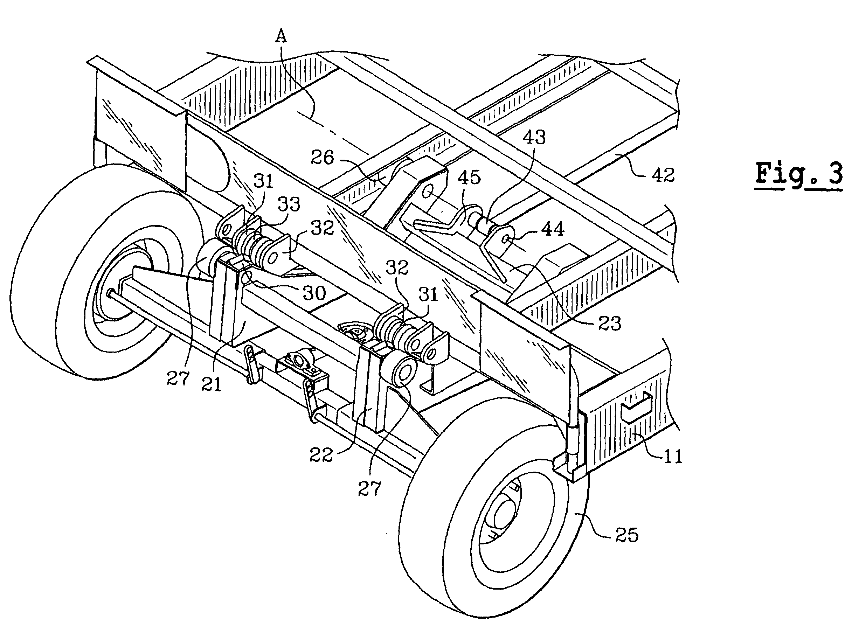

Dans la position représentée figure 7, le chariot se trouve dans la position correspondant à la figure 3, où les galets arrière 27 sont sortis des rails 16 et les galets complémentaires 31 reposent sur les longerons 21, 22 du chariot.

Dans la position représentée figure 8, le chariot est encore un peu plus déplacé vers l'arrière, et corrélativement il a pivoté autour de l'axe A, les galets complémentaires 31 roulant vers le fond de la cuvette 28, de sorte que le plateau descendu, les roues 25 passant derrière le dit plateau. On notera que, simultanément, on a commandé le relevage de la tête d'attelage, pour permettre, dans le cas ou elle est reste attelée sur le tracteur, de descendre le plateau en restant sensiblement parallèle au sol.

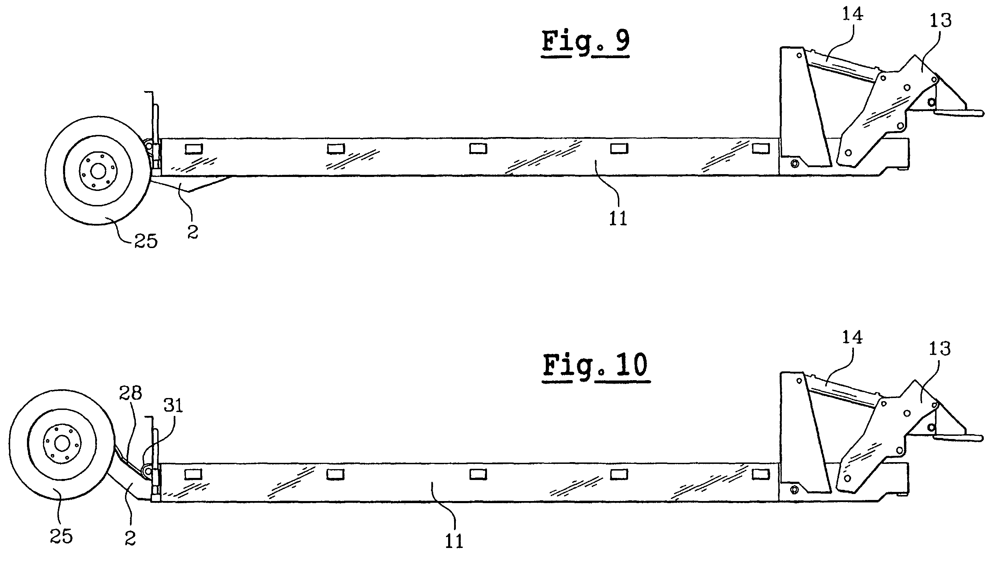

La figure 9 représente la remorque dans une position où, le déplacement du chariot s'étant poursuivi, le plateau se trouve encore plus abaissé.

Enfin la figure 10 représente le plateau posé sur le sol, le chariot ayant été repoussé au maximum vers l'arrière. On notera que les galets complémentaires reposent alors sur la partie inclinée la plus avant de la cuvette formée par la surface supérieure des longerons 21, 22. La course de la tige du vérin est déterminée de manière que les galets avant 26 ne puissent pas sortir des rails, et des moyens de butée complémentaires peuvent être prévus sur les rails et le chariot, comme sécurités à cet effet.

En rétractant le vérin, le train d'essieu est retiré vers le dessous du plateau, en commençant à pivoter en sens inverse et donc en relevant simultanément le plateau, jusqu'à ce que les galets arrière 27 soient à nouveau insérés dans les rails 16. Puis le chariot coulisse dans les rails 16 jusqu'en butée de course avant. A ce moment, une chape 51 usinée en forme de crochet vient se rabattre sur la broche 44 reliant la tige de vérin au train d'essieu ou sur des tourillons de maintien de cette broche. Cette chape permet de sécuriser le positionnement du train d'essieu pendant le transport sur route afin d'éviter tout risque d'accident en cas de rupture d'un flexible hydraulique d'alimentation du vérin. Lors d'une manoeuvre ultérieure d'abaissement du plateau, on commande le pivotement de la chape 51, par exemple au moyen d'un levier situé vers la tête d'attelage et relié à la chape par un câble, de manière connue en soi, pour dégager la broche 44, puis on commande le vérin 40 pour déplacer le chariot.

## Revendications

1. Remorque à plateau abaissable comportant un châssis (11) et un train d'essieu porté par un chariot (2) coulissant longitudinalement par rapport au châssis en étant guidé par des rails (16) solidaires du châssis, le chariot (2) comportant des moyens de guidage avant (26), pivotant par rapport au chariot selon un axe de pivot transversal (A), et des moyens de guidage arrière(27), les dits moyens de guidage avant et arrière coulissant dans les rails (16) pour assurer une translation rectiligne du chariot, le train d'essieu étant décalé longitudinalement vers les moyens de guidage arrière par rapport au dit axe de pivot (A), les rails (16) débouchant librement à l'extrémité de la remorque, et l'extrémité de la remorque comportant en position fixe des moyens de guidage complémentaire (31) aptes à coopérer avec une surface de guidage supérieure (28) du chariot, de manière que lorsque les moyens de guidage arrière (27) sont sortis des rails (16), l'extrémité du châssis repose sur la dite surface supérieure de guidage (28) par l'intermédiaire des moyens de guidage complémentaires (31), de sorte que, quand le chariot est déplacé par rapport au châssis avec les moyens de guidage avant dans les rails et les moyens de guidage complémentaires en appui sur la surface supérieure de guidage, le chariot pivote autour de l'axe de pivot transversal (A) et autorise ainsi l'abaissement du châssis par rapport au train d'essieu, **caractérisé en ce que** la forme de la dite surface supérieure de guidage est concave.

2. Remorque selon la revendication 1, **caractérisée en ce que** les rails (16) sont des profilés de section en forme de U, et les moyens de guidage avant et arrière sont des galets (26, 27) qui se déplacent dans les dits U.

3. Remorque selon la revendication 2, **caractérisée en ce que** l'axe de pivot transversal (A) est l'axe de rotation des galets avant (26) constituant les moyens de guidage avant.

4. Remorque selon la revendication 1, **caractérisée en ce que** les moyens de guidage complémentaire sont des galets (31) montés en position fixe sur le châssis.

5. Remorque selon la revendication 4, **caractérisée en ce que** les galets de guidage complémentaires (31) comportent une rainure circonférentielle (33), apte à coopérer avec une nervure (29) de profil correspondant à la dite rainure, la dite nervure étant aménagée sur la surface supérieure de guidage (28) et s'étendant selon la direction longitudinale du châssis en suivant la forme concave de la dite surface.

6. Remorque selon la revendication 1, **caractérisée en ce que** le déplacement du chariot est commandé par un vérin (40) dont la tête est articulée sur le chariot selon un axe confondu avec l'axe (A) de pivot transversal.

7. Remorque selon la revendication 6, **caractérisée en ce que** le vérin (40) est situé dans une poutre centrale (12) du châssis.

8. Remorque selon la revendication 1, **caractérisée en ce qu'**elle comporte un verrou de sécurité comportant un crochet (51) articulé sur le châssis et apte à s'engager automatiquement avec un moyen d'accrochage solidaire du chariot lorsque le chariot est ramené dans une position avancée de transport.

9. Remorque selon la revendication 8, **caractérisée en ce que** le crochet est constitué d'une chape pivotante (51) ayant deux ailes en forme de crochet et les moyens d'accrochage sont constitués par des tourillons de la broche de liaison du vérin sur le chariot sur lesquels s'engage chaque crochet de la chape.

## Patentansprüche

1. Anhänger mit absenkbarer Ladefläche, der einen Rahmen (11) und einen Achsenzug aufweist, der von einem Schlitten (2) getragen wird, welcher in Längsrichtung relativ zum Rahmen verschiebbar ist und hierbei von mit dem Rahmen fest verbundenen Schienen geführt wird, wobei der Schlitten (2) vordere Führungsmittel (26), die relativ zum Schlitten um eine quer verlaufende Schwenkachse (A) verschwenken, und hintere Führungseinrichtungen (27) aufweist, wobei die vorderen und hinteren Führungsmittel in den Schienen (16) gleiten, um eine gradlinige Bewegung des Schlittens sicherzustellen, wobei der Achsenzug in Längsrichtung relativ zur Schwenkachse (A) zu den hinteren Führungsmitteln verschoben ist, wobei die Schienen (16) am Ende des Anhängers frei münden und das Ende des Anhängers in der Festposition zusätzliche Führungsmittel (31) aufweist, die mit einer oberen Führungsfläche (28) des Schlittens so zusammenwirken können, dass, wenn die hinteren Führungsmittel (27) die Schienen (16) verlassen haben, das Ende des Rahmens durch die komplementären Führungsmittel (31) auf der oberen Führungsfläche (28) ruht, so dass, wenn der Schlitten relativ zum Rahmen mit den vorderen Führungseinrichtungen in den Schienen verschoben wird und die zusätzlichen Führungseinrichtungen auf der oberen Führungsfläche liegen, der Schlitten um die quer verlaufende Schwenkachse (A) schwenkt und so das Absenken des Rahmens relativ zum Achsenzug ermöglicht, **dadurch gekennzeichnet, dass** die Form der oberen Führungsfläche konkav ist.

2. Anhänger nach Anspruch 1, **dadurch gekennzeichnet, dass** die Schienen (16) Profile mit U-förmigem Querschnitt sind, und die vorderen und hinteren Führungseinrichtungen Rollen (26, 27), die sich in den Us bewegen.

3. Anhänger nach Anspruch 2, **dadurch gekennzeichnet, dass** die quer verlaufende Schwenkachse (A) die Rotationsachse der vorderen Rollen sind, die die vorderen Führungseinrichtungen bilden.

4. Anhänger nach Anspruch 1, **dadurch gekennzeichnet, dass** die zusätzlichen Führungseinrichtungen Rollen (31) sind, die in fester Position am Rahmen angebracht sind.

5. Anhänger nach Anspruch 4, **dadurch gekennzeichnet, dass** die zusätzlichen Führungsrollen einen umlaufenden Einschnitt (33) aufweisen, der mit einer Rippe (29) mit einem Profil zusammenwirken kann, das dem Profil des Einschnitts entspricht, wobei die Rippe an der oberen Führungsfläche (28) angeordnet ist und sich in der Längsrichtung des Rahmens erstreckt und der konkaven Form der Fläche folgt.

6. Anhänger nach Anspruch 1, **dadurch gekennzeichnet, dass** die Bewegung des Schlittens von einem Zylinder (40) gesteuert ist, dessen Kopf auf dem Schlitten auf einer Achse angelenkt ist, die mit der quer verlaufenden Schwenkachse zusammenfällt.

7. Anhänger nach Anspruch 6, **dadurch gekennzeichnet, dass** der Zylinder (40) in einem Mittelträger (12) des Rahmens angeordnet ist.

8. Anhänger nach Anspruch 1, **dadurch gekennzeichnet, dass** er eine Sicherheitsverriegelung aufweist, die einen Haken (51) aufweist, der am Rahmen angelenkt ist und automatisch in ein Einhakmittel eingreift, das fest mit dem Schlitten verbunden ist, wenn der Rahmen in eine vordere Transportposition geführt wird.

9. Anhänger nach Anspruch 8, **dadurch gekennzeichnet, dass** der Haken aus einem schwenkbaren Bügel (51) besteht, der zwei Flügel in Hakenform aufweist, und wobei die Einhakeinrichtungen aus Lagerzapfen des Verbindungsturms des Zylinders auf dem Schlitten bestehen, in die jeder Haken des Bügels eingreift.

## Claims

1. Trailer with a lowerable platform, comprising a chassis (11) and an axle borne by a carriage (2) that slides longitudinally with respect to the chassis while being guided by rails (16) that are secured to the chassis, the carriage (2) comprising front guide means (26) which pivot with respect to the carriage on a transverse pivot axis (A) and rear guide means (27), said front and rear guide means sliding in the rails (16) to produce rectilinear translation of the carriage, the axle being offset longitudinally towards the rear guide means with respect to said pivot axis (A), the rails (16) opening freely at the end of the trailer, and the end of the trailer comprising at a fixed position complementary guide means (31) that can cooperate with an upper guide surface (28) of the carriage so that when the rear guide means (27) have come out of the rails (16) the end of the chassis rests on said upper guide surface (28) via the complementary guide means (31) so that, when the carriage is moved with respect to the chassis with the front guide means in the rails and the complementary guide means bearing against the upper guide surface, the carriage pivots about the transverse pivot axis (A) and thus allows lowering of the chassis with respect to the axle, **characterized in that** said upper guide surface is concave.

2. Trailer according to Claim 1, **characterized in that** the rails (16) are profiled parts which are U-shaped in cross section, and the front and rear guide means are rollers (26, 27) which move in said "U"s.

3. Trailer according to Claim 2, **characterized in that** the transverse pivot axis (A) is the axis of rotation of the front rollers (26) which constitute the front guide means.

4. Trailer according to Claim 1, **characterized in that** the complementary guide means are rollers (31) mounted at a fixed position on the chassis.

5. Trailer according to Claim 4, **characterized in that** the complementary guide rollers (31) comprise a circumferential groove (33) that can cooperate with a rib (29) having a profile that corresponds to said groove, said rib being made on the upper guide surface (28) and extending in the longitudinal direction of the chassis, following the concave shape of said surface.

6. Trailer according to Claim 1, **characterized in that** the movement of the carriage is controlled by a ram (40), the head of which is articulated on the carriage in an axis that is coincident with the transverse pivot axis (A).

7. Trailer according to Claim 6, **characterized in that** the ram (40) is located in a central beam (12) of the chassis.

8. Trailer according to Claim 1, **characterized in that** it comprises a safety latch comprising a hook (51) that is articulated on the chassis and can engage automatically with a coupling means secured to the carriage when the carriage is brought into a forward transport position.

9. Trailer according to Claim B, **characterized in that** the hook consists of a pivoting clevis (51) having two wings in the form of a hook, and the coupling means consist of journals of the pin for connecting the ram to the carriage on which each hook of the clevis engages.
